# EUROPÄISCHE PATENTSCHRIFT

(11) **EP 2 551 218 B1**
(45) Veröffentlichungstag und Bekanntmachung des Hinweises auf die Patenterteilung: **29.01.2014**
(21) Anmeldenummer: 12177632.2
(22) Anmeldetag: 24.07.2012
(51) Int. Cl.: B65G 1/137

(54) **Verfahren zum Lagern und Kommissionieren**
Method for storing and commissioning
Procédé de stockage et de préparation de commande

(30) Priorität: 27.07.2011 DE 102011052193
(43) Veröffentlichungstag der Anmeldung: 30.01.2013
(73) Patentinhaber: Dematic GmbH, 63073 Offenbach (DE)
(72) Erfinder: Cremer, Holger, 40219 Düsseldorf (DE)
(74) Vertreter: Moser & Götze

(56) Entgegenhaltungen:
- EP-A1- 0 733 563
- EP-A1- 1 698 573
- EP-A1- 2 327 644
- AT-A4- 506 221
- DE-A1- 3 927 203

## Beschreibung

Die Erfindung betrifft ein Verfahren zum Lagern und Kommissionieren von Einzelartikeln und Packungeinheiten in einem Lagersystem.

In modernen Zentrallagern zur Versorgung von Einzelhändlern werden die Waren auf Paletten angeliefert und nach der Depalletierung und Vereinzelung in Einzelartikel und Packeinheiten auf Tablaren zwischengelagert. Bei einem entsprechenden Auftrag werden dann die benötigten Artikel und Packeinheiten aus dem Lager abgerufen und sortiert bzw. sequenziert einer Kommissionierstation zugeführt, wo die Einzelartikel und Packeinheiten wiederum auf Paletten oder Rollwagen zum Versand gepackt werden.

An diese Lager- und Kommissioniersysteme werden hohe Anforderungen gestellt. So soll trotz eines großen Artikelspektrums eine optimale Raumausnutzung im Lager und großer Durchsatz an den Kommissionierstationen bei möglichst geringen Betriebskosten möglich sein.

Aus der EP 1 698 573 B1 ist ein automatisiertes Lagersystem zum Lagern und Kommissionieren von Artikeln und entsprechendes Verfahren bekannt, bei dem einer Einrichtung zur Vereinzelung von angelieferten Artikeln in Packeinheiten und zum Umlagern auf Tablare, ein Tablarlager zum Lagern der Packeinheiten auf den Tablaren, eine Entnahme-Fördertechnik zur Entnahme und zur für die Beladung auf Auftrags-Ladungsträger sequenzierten Bereitstellung der Packeinheiten, und eine Beladestation zum Laden der Packeinheiten auf die Auftrags-Ladungsträger vorgesehen ist. Es werden also durchgängig flache tablettförmige Ladungsträger, sogenannte Tablare für den Transport und die Lagerung aller Artikel bzw. Packeinheiten verwendet.

Aus der DE 10 2009 033 697 A1 ist ein Verfahren zum Lagern und Kommissionieren von Artikeln in Form von Einzelartikeln und/oder Packungseinheiten in einem Lagersystem bestehend aus einem Palettenregallager zur Lagerung von auf Wareneingangs-Ladungsträgern angelieferten Artikeln, einer Einrichtung zur Depalletierung, Vereinzelung und Umlagerung von Artikeln von Eingangs-Ladungsträgern auf Transport-Ladungsträger, einem Regallager zur Lagerung vereinzelter Artikel als Zwischenpuffer vor der Kommissionierung, zumindest einer Kommissionierstation, in der Artikel auf einen Ziel-Ladungsträger geladen werden, und einer Fördertechnik zum Transport von vereinzelten Artikeln zum Regallager und vom Regallager zur Kommissionierstation, wobei Transport-Ladungsträger für den Transport von vereinzelten Artikeln auf der Fördertechnik verwendet werden. Das Verfahren entspricht insoweit dem obigen, wobei in Abwandlung davon lediglich im Lager vereinzelte Artikel ohne Transport-Ladungsträger gelagert werden.

Aus der EP 0 776 308 B1 ist ebenfalls ein Verfahren zum Kommissionieren bekannt, bei dem flache tablettförmige Ladungsträger durchgängig zum Einsatz kommen. In dem beschriebenen Kommissionier-Verfahren werden artikelrein zusammengestellte, mindestens eine, vorzugsweise jedoch mehrere Einheiten umfassende Verteileinheiten, zu mehreren solche Verteileinheiten umfassenden Großeinheiten zusammengestellt, wobei aus den ankommenden Großeinheiten die Verteileinheiten entnommen und zwischengelagert werden, wonach aus diesen zwischengelagerten Verteileinheiten die einzelnen Kommissionen zusammengestellt und in Transportbehälter eingegeben werden. Dabei werden die Verteileinheiten einzeln auf je einen mit einem Code versehenen Warenträger gelegt und die Daten der auf dem betreffenden Warenträger befindlichen Verteileinheit einem Rechner zugeleitet und dem diese Verteileinheit aufnehmenden Warenträger zugeordnet werden und danach die Warenträger in Lagerbehälter eingeschoben und mit den Lagerbehältern transportiert und zwischen gelagert werden, wonach die für je eine Kommission bestimmten Verteileinheiten verschiedener Waren samt den diese tragenden Warenträger rechnergestützt aus den Lagerbehältern entnommen und in Kommissionsbehälter eingeschoben und mit diesen zu einer Entnahmestation gebracht werden, wo sie ebenfalls rechnergestützt entsprechend einer vorgegebenen Packordnung den Kommissionsbehältern entnommen werden.

Die in diesen Schriften verwendeten Tablare haben jedoch einen relativ großen Platzbedarf bzgl. ihrer Grundfläche in Relation zum transportierten Artikel oder Packeinheit. Zudem ist es aufwendig, die Tablare jeweils gezielt bereitzustellen, so dass meist sogar eine gesonderte Fördertechnik für leere Tablare notwendig ist.

Demgegenüber besteht die Aufgabe der vorliegenden Erfindung ein Verfahren zum Lagern und Kommissionieren bereitzustellen, das eine optimierte Platznutzung im Lager erlaubt und gleichzeitig die Betriebskosten verringert. Ebenfalls sollte gleichzeitig eine dem Fördergut angepasste und optimierte Fördertechnik ermöglicht sowie den Bedarf an leeren Transportladungsträgern minimiert werden.

Diese Aufgabe wird durch das in Anspruch 1 wiedergegebene Verfahren gelöst.

Dadurch, dass erfindungsgemäß lediglich nicht-förderbare Einzelartikel bzw. Packeinheiten auf bzw. in Ladungsträger gelagert und transportiert werden und dagegen förderbare, also der überwiegende Teil der Einzelartikel und Packeinheiten ohne Ladungsträger gehandhabt werden, ist es möglich, den Anteil der bisher durch die Ladungsträger belegten aber ungenutzten Fläche zu verringern. So können die förderbaren Einzelartikel und Packeinheiten mit weniger Abstand zueinander im Lager und auf der Fördertechnik platziert werden im Vergleich zu einer identischen Belegung mit Hilfe von Ladungsträgern. Den schwer zu handhabendenden nicht-förderbaren Einzelartikeln und Packeinheiten wird durch die Ladungsträgerverwendung Rechnung getragen.

Es wird also insgesamt die Verwendung von Ladungsträgern minimiert, was eine Optimierung der Raumausnutzung im Lager einerseits und andererseits auch eine bessere Auslastung der Fördertechnik erlaubt, da z.B. die Stauplatzlänge variabel von den Artikeln bzw. Packeinheiten gestaltet werden kann und weniger Leerfahrten der Ladungsträger vorkommen. Auch kann die Leer-Ladungsträgerfördertechnik verringert und damit die Betriebskosten gesenkt werden.

Es versteht sich, dass auch mehrere Einzelartikel in bzw. auf jedem Ladungsträger transportiert und gelagert werden können.

Unter Packeinheit wird vorliegend ein Gebinde als Handelseinheit und Ladeeinheit für die Warenverteilung verstanden. Es handelt sich um eine Zusammenfassung von Produkten gleicher Art oder verschiedener Art zur gemeinsamen Handhabung in der Logistik (z.B. Bestellung durch den Einzelhandel). Gebinde steht dabei sowohl für eine Packung, die Gesamtheit aus Packgut und Verpackung, ein Packstück, das zu transportierende Kollo sowie eine aus einem Stück bestehende Verpackung, als Leergebinde.

Als Eingangs-Ladungsträger kommen meist Paletten zum Einsatz, auf denen die Waren vom Hersteller/Erzeuger angeliefert werden und ggf. in einem Palettenlager zwischen gelagert werden, bevor sie benötigt sind.

Als Auftragsladungsträger kommen üblicherweise Rollwagen, Paletten oder größere Kartons sowie Mehrwegbehälter in Frage.

Vorliegend wird unter "förderbar" die Eigenschaft der als Einzelartikel oder Packeinheiten vorliegenden Produkte mittels bekannter Fördertechnik inklusive der entsprechenden Lastaufnahmemittel ohne Ladungsträger (Tablare, Behälter, etc.) direkt und automatisch transportiert und gehandhabt zu werden, ohne dass es zum Stillstand der Fördertechnik durch Verhaken, Hängenbleiben, Verkeilen, Umfallen etc. kommt; wohingegen "nicht-förderbar" bedeutet, dass diese Einzelartikel oder Packeinheiten so uneinheitlich bzw. inhomogen in ihren Eigenschaften (Schwerpunktlage, äußere Hülle/Verpackung etc.) sind, das sie nicht ohne Probleme automatisch transportabel bzw. nicht ohne Beschädigung sind.

Vorzugsweise sind förderbare Einzelartikel bzw. Packeinheiten solche, die eine Grundfläche bzw. Standfläche größer gleich 10 cm X 10 cm aufweisen und die sicher transportiert werden können. Es hat sich nämlich herausgestellt, dass dies das überwiegende Artikelspektrum des Handels abdeckt. Prinzipiell wäre es aus Sicht der Raumausnutzung bevorzugt auch die aller kleinsten Einzelartikel ohne Ladungsträger handzuhaben. Allerdings ist dies technisch nicht zuverlässig möglich, so dass die Störungen während des Transports die Vorteile aufwiegen würden.

Sicherer Transport ist in diesem Sinne als zuverlässiger Transport ohne Unterbrechung und Notwendigkeit eines manuellen Eingriffs zu verstehen, da die Anlage Verfügbarkeiten (ohne Stillstand durch Transportprobleme) größer 99% aufweisen muss.

Vorzugsweise ist die Kommissionierung als automatische Kommissionierstation mittels Robotor etc. ausgebildet, so dass zusammen mit einer entsprechenden Automatisierung der Depalletierung und Vereinzelung sowie Fördertechnik ein erheblicher Automatisierungsgrad erreicht wird. Es versteht sich jedoch, dass auch eine manuelle Kommissionierung und/oder Depalletierung im Rahmen der Erfindung verwendbar ist. Es gibt sogar Umgebungen bzw. Produktspektren, die eine Automatisierung nicht zulassen.

Besonders bevorzugt ist die Verwendung von Behältern als Ladungsträger, insbesondere wenn diese zur Entleerung einen aushebbaren Boden oder eine schwenkbare Seitenwand aufweisen, so dass sie analog der Tablare entleerbar sind, unter Inkaufnahme eines längeren Hubweges.

Im Lager werden förderbare Einzelartikel, Packungseinheiten direkt sowie nicht-förderbare Einzelartikel (bzw. mehrere Einzelartikel) und Packungseinheiten in Behältern zwischengelagert.

Es versteht sich, dass eine sortierte oder sequenzierte Auslagerung und Transport Einzelartikel und Packeinheiten zur Kommissionierstation im Rahmen der Möglichkeiten ist.

Um die nicht-förderbaren Einzelartikel auf bzw. in Ladungsträger und gleichzeitig auch die förderbaren ggf. größeren Artikel und Packeinheiten direkt handhaben zu können, ist es besonders bevorzugt, wenn die Fördertechnik ein Lastaufnahmemittel umfasst, das eine Transportfläche aufweist und seitlich der Transportfläche jeweils ein quer zur Fahrtrichtung ausfahrbarer Teleskoparm angeordnet ist, die jeweils drei verschwenkbare Mitnehmer aufweisen, die zwischen einer vom Teleskoparm in die Transportfläche hineinragenden Arbeitsstellung und einer im Teleskoparm versenkten Ruhestellung verschwenkbar sind, wobei der Abstand der Teleskoparme zueinander verstellbar ist.

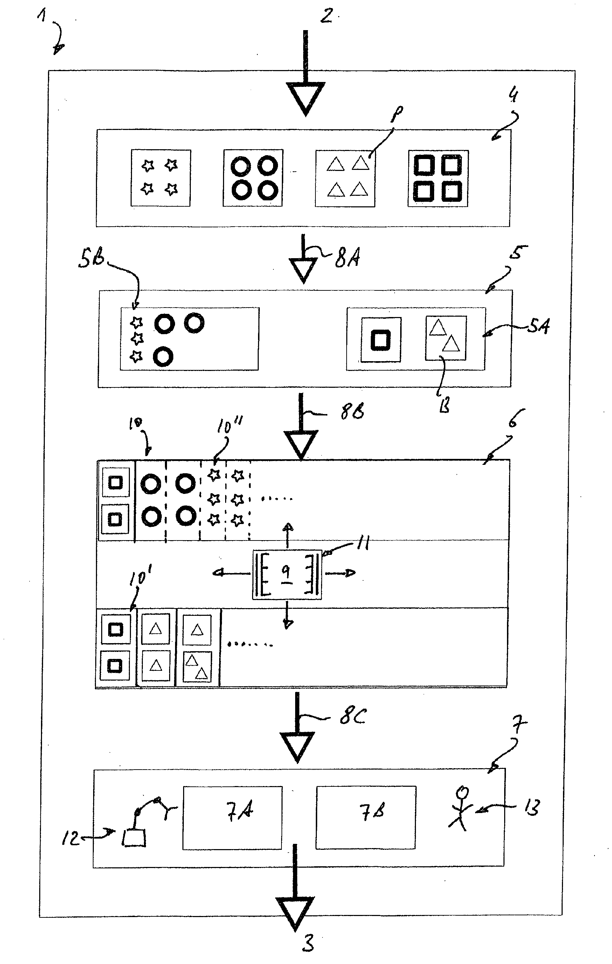

Weitere Einzelheiten und Vorteile der Erfindung ergeben sich aus der nachfolgenden Beschreibung eines Ausführungsbeispiels anhand der einzigen Zeichnung, in der schematisch ein Lager- und Kommissioniersystem unter Durchführung eines Verfahrens zum Lagern und Kommissionieren nach der Erfindung dargestellt ist.

In der Figur ist ein als Ganzes mit 1 bezeichnetes Distributionslager dargestellt, 1 das zur Versorgung von Handelsgeschäften dient.

Es umfasst einen Wareneingang 2 zur Anlieferung von Produkten auf Paletten, wobei die unterschiedlichen Produkte P1 als Sterne, P2 als Kreise, P3 als Dreiecke und P4 als Quadrate symbolisiert sind.

Es umfasst ferner einen Warenausgang 3 zur Übergabe und Verteilung der für die einzelnen Einzelhandelsgeschäfte zusammengestellten (kommissionierten) Auftragsladungsträger.

Nach dem Eingang der Waren bzw. Produkte im Wareneingang 2 gelangen diese nach einer Eingangskontrolle in ein Palettenlager 4 zur Zwischenlagerung der auf Paletten angelieferten Produkte P1 (Sterne), P2 (Kreise), P3 (Dreiecke) und P4 (Quadrate).

Werden die im Palettenlager 4 befindlichen Produkte für Aufträge benötigt, so werden die Paletten aus dem Lager abgerufen und einer Einrichtung 5 zur Depalletierung und Vereinzelung über eine geeignete Fördertechnik 8A (z.B. Palettenförderer) zugeführt.

Dort werden nicht-förderbare Einzelartikel in einer Vorrichtung 5A, vorliegend Produkte P3 (Dreiecke) und P4 (Quadrate) von den Paletten P in Behälter B nach dem Vereinzeln für den Transport und die Lagerung umgelagert. Es versteht sich, dass ggf. auch mehrere einzelne Artikel in jeden Behälter B eingebracht werden können (vgl. Dreiecke).

Alle übrigen, also förderbaren Produkte, vorliegend P1 (Sterne) und P2 (Kreise), werden direkt und ohne Ladungsträger transportiert und gelagert, so dass diese in einer weiteren Vorrichtung 5B nur depalletiert und vereinzelt werden.

Sowohl die beladenen Behälter B als auch die direkt förderbaren Produkte werden anschließend über eine geeignete Fördertechnik 8B einem Hochregallager 6 zugeführt, in dem die Produkte zwischengelagert werden.

Das Hochregallager 6 umfasst mehrere Ebenen und Gassen von Regalen mit einer Vielzahl von lediglich angedeuteten Lagerplätzen 10.

Die Lagerplätze 10' für die Behälter B weisen eine feste Breite auf und erlauben zugleich eine doppelt tiefe Lagerung.

Die Lagerplätze 10" für die direkte Lagerung der förderbaren Produkte können je nach Produkt unterschiedliche Breiten aufweisen und erlauben ebenfalls zugleich eine doppelt oder sogar dreifach tiefe Lagerung. Somit können je nach Produktspektrum eine größere Zahl von Produkten förderbarer Produkte gelagert werden, da deren Abstand im Lager nunmehr nicht wie bei den Lagerplätzen 10' an die Behälterabmessungen gebunden ist.

Das Hochregallager 6 wird mittels eine Satellitenfahrzeugs oder Shuttles 9 bedient. Es wird im sogenannten Captive Betrieb betrieben, d.h. es wird ein Shuttle pro Ebene des Lagers 6 verwendet, das die ein- und auszulagernden Produkte bzw. Behälter B über nicht dargestellte Lift erhält bzw. abgibt. Die Lifte können sowohl an den Stirnseiten der Lagergassen als auch im Regal selber integriert angeordnet sein.

Die Shuttle 9 umfassen jeweils ein Lastaufnahmemittel 11, das zur variablen direkten Handhabung der unterschiedlichen förderbaren Produkte und auch der Behälter geeignet ist. Es umfasst eine Transportfläche und seitlich der Transportfläche jeweils ein quer zur Fahrtrichtung ausfahrbaren Teleskoparm, die jeweils vier verschwenkbare Mitnehmer aufweisen, die zwischen einer vom Teleskoparm in die Transportfläche hineinragenden Arbeitsstellung und einer im Teleskoparm versenkten Ruhestellung verschwenkbar sind, wobei der Abstand der Teleskoparme zueinander verstellbar ist. Die Mitnehmer dienen dazu den jeweiligen Behälter oder Produkt von der Transportfläche ins Regal zu schieben oder von Regal auf die Transportfläche zu ziehen. Die Mitnehmer sind jeweils einzeln ansteuerbar, so dass je nach Behälter oder Produkt und Lagertiefe eine gezielte Einnahme der Arbeitsstellung bzw. Ruhestellung möglich ist.

Je nach Bedarf findet aus dem Lager 6 eine sortierte oder sequenzierte Auslagerung und ein Transport der Behälter und Produkte zu einer Kommissionierung 7 über eine geeignet Fördertechnik 8C statt.

Es versteht sich, dass die Fördertechnik 8B und 8C geeignet sind, um sowohl förderbare Produkte direkt als auch Behälter sich zu fördern. So können entweder Förderbänder oder geeignete Rollenförderer mit kleinem Abstand der Rollen zueinander verwendet werden.

In der Kommissionierung 7 findet je nach Anforderung und Möglichkeit entweder eine automatische Kommissionierung 7A mittels Roboter 12 oder eine manuelle (Kommissionierer 13) Kommissionierung 7B der zu einem Auftrag gehörenden Produkte auf Auftragsladungsträger (üblicherweise Rollwagen oder Paletten) statt.

Nach beendeter Zusammenstellung eines Auftrags erfolgt die Abgabe des jeweiligen Auftragsladungsträgers an den Warenausgang 3.

## Patentansprüche

1. Verfahren zum Lagern und Kommissionieren von Einzelartikeln und Packungseinheiten in einem Lagersystem umfassend
- eine Einrichtung zur Depalletierung, Vereinzelung und Umlagerung von Einzelartikeln von Eingangs-Ladungsträgern und ggf. Ablage auf bzw. in Ladungsträgern;
- und eine weitere Einrichtung zur Depalletierung und Vereinzelung von Packungseinheiten von Eingangs-Ladungsträgern und ggf. Ablage auf bzw. in Ladungsträgern;
- eine Fördertechnik zum Transport von Einzelartikeln, Ladungsträgern und Packungseinheiten in ein Lager zur Zwischenlagerung von Einzelartikeln auf bzw. in Ladungsträgern und Packungseinheiten;
- mindestens eine Kommissionierstation, in der Einzelartikel und/oder Packungseinheiten auf Auftragsladungsträger geladen werden;
- eine Fördertechnik zum Transport von Einzelartikeln, Ladungsträgern und Packungseinheiten vom Lager zur Kommissionierung;
wobei Ladungsträger nur für den Transport und die Lagerung von nicht-förderbaren Einzelartikeln oder nicht-förderbaren Packungseinheiten verwendet werden und förderbare Packungseinheiten sowie förderbare Einzelartikel direkt und ohne Ladungsträger transportiert und gelagert werden.

2. Verfahren nach Anspruch 1, **dadurch gekennzeichnet, dass** förderbare Einzelartikel oder Packeinheiten solche sind, die eine Grundfläche bzw. Standfläche größer gleich 10 cm X 10 cm aufweisen und die sicher transportiert werden können.

3. Verfahren nach Anspruch 1 oder 2, **dadurch gekennzeichnet, dass** die Kommissionierung automatisches oder manuelles Kommissionieren erlaubt.

4. Verfahren nach einem der vorhergehenden Ansprüche, **dadurch gekennzeichnet, dass** die Ladungsträger Behälter sind.

5. Verfahren nach Anspruch 4, **dadurch gekennzeichnet, dass** die Behälter zur Entleerung einen aushebbaren Boden oder eine schwenkbare Seitenwand aufweisen.

6. Verfahren nach einem der vorhergehenden Ansprüche, **dadurch gekennzeichnet, dass** eine sortierte oder sequenzierte Auslagerung und Transport der Einzelartikeln, Ladungsträgern und Packungseinheiten zur Kommissionierung stattfindet.

7. Verfahren nach einem der vorhergehenden Ansprüche, **dadurch gekennzeichnet, dass** die Fördertechnik ein Lastaufnahmemittel umfasst, das eine Transportfläche aufweist und seitlich der Transportfläche jeweils ein quer zur Fahrtrichtung ausfahrbarer Teleskoparm angeordnet ist, die jeweils drei verschwenkbare Mitnehmer aufweisen, die zwischen einer vom Teleskoparm in die Transportfläche hineinragenden Arbeitsstellung und einer im Teleskoparm versenkten Ruhestellung verschwenkbar sind, wobei der Abstand der Teleskoparme zueinander verstellbar ist.

## Claims

1. A method of storing and commissioning individual articles and packaging units in a storage system including
- a device for depalletising, separating and transferring individual articles from input loading equipment and optionally storage onto or into load carriers;
- and a further device for depalletising and separating packaging units from input loading equipment and optionally storage onto or into load carriers;
- conveying equipment for transporting individual articles, load carriers and packaging units into a store for temporary storage of individual articles onto or into load carriers and packaging units;
- at least one commissioning station, in which individual articles and/or packaging units are loaded onto order load carriers;
- conveying equipment for transporting individual articles, load carriers and packaging units from the store to the commissioning;
wherein load carriers are used only for the transport and the storage of non-conveyable individual articles or non-conveyable packaging units and conveyable packaging units and conveyable individual articles are transported directly and without a load carrier and are stored.

2. A method as claimed in Claim 1, **characterised in that** conveyable individual articles or packaging units are those which have a base surface or support surface greater than or equal to 10 cm X 10 cm and which can be safely transported.

3. A method as claimed in Claim 1 or 2, **characterised in that** the commissioning allows automatic or manual commissioning.

4. A method as claimed in one of the preceding claims, **characterised in that** the load carriers are containers.

5. A method as claimed in Claim 4, **characterised in that** the containers have a base which may be lifted out or a pivotable side wall for the purpose of emptying them.

6. A method as claimed in one of the preceding claims, **characterised in that** a sorted or sequenced removal from storage and transport of the individual articles, load carriers and packaging units to the commissioning takes place.

7. A method as claimed in one of the preceding claims, **characterised in that** the conveying equipment includes a load receiving means, which has a transport surface and, arranged laterally of the transport surface, there is a respective telescopic arm which is extendable transversely to the direction of movement and which has three respective pivotable drivers, which are pivotable between a working position, in which they project from the telescopic arm into the transport surface, and a rest position, in which they are recessed into the telescopic arm, whereby the spacing of the telescopic arms with respect to one another is adjustable.

## Revendications

1. Procédé de stockage et de préparation de commandes pour des articles individuels et des unités d'emballage dans un système de stockage, ledit procédé comportant
- un dispositif destiné à dépalettiser, isoler et transférer des articles individuels de supports de charge d'entrée et éventuellement les déposer sur ou dans des supports de charge ;
- et un autre dispositif destiné à dépalettiser et isoler des unités d'emballage de supports de charge d'entrée et éventuellement les déposer sur ou dans des supports de charge ;
- une technique de transport destinée à transporter des articles individuels, des supports de charge et des unités d'emballage dans un magasin destiné au stockage provisoire d'articles individuels sur ou dans des supports de charge et d'unités d'emballage ;
- au moins un poste de préparation de commandes dans lequel des articles individuels et/ou des unités d'emballage sont chargés sur des supports de charge de commande ;
- une technique de transport destinée à transport des articles individuels, des supports de charge et des unités d'emballage du magasin afin de préparer des commandes ;
les supports de charge n'étant utilisés que pour transporter et stocker des articles individuels non transportables ou des unités d'emballage non transportables et les unités d'emballage transportables ainsi que les articles individuels transportables étant chargés et transportés directement sans support de charge.

2. Procédé selon la revendication 1, **caractérisé en ce que** des articles individuels ou des unités d'emballage transportables sont ceux qui présentent une surface de base ou une surface au sol supérieure ou égale à 10 cm x 10 cm et qui peuvent être transportés en toute sécurité.

3. Procédé selon la revendication 1 ou 2, **caractérisé en ce que** la préparation de commandes peut être effectuée automatiquement ou manuellement.

4. Procédé selon l'une des revendications précédentes, **caractérisé en ce que** les supports de charge sont des conteneurs.

5. Procédé selon la revendication 4, **caractérisé en ce que** les conteneurs comportent un fond amovible ou une paroi latérale pivotante permettant de les vider.

6. Procédé selon l'une des revendications précédentes, **caractérisé en ce que** l'on déstocke et transporte, de façon sélective ou séquencée, des articles individuels, des supports de charge et des unités d'emballage afin de préparer des commandes.

7. Procédé selon l'une des revendications précédentes, **caractérisé en ce que** la technique de transport comporte un moyen de réception de charge qui présente une surface de transport et **en ce que** de chaque côté de la surface de transport est disposé un bras télescopique qui peut être déployé transversalement à la direction de déplacement et qui comporte trois actionneurs pivotants qui sont aptes à pivoter entre une position de travail saillante du bras télescopique jusque dans la surface de transport et une position de repos escamotée dans le bras télescopique, la distance des bras télescopiques l'un par rapport à l'autre est réglable.
